# EUROPÄISCHE PATENTSCHRIFT

(11) **EP 1 759 571 B1**
(45) Veröffentlichungstag und Bekanntmachung des Hinweises auf die Patenterteilung: **29.09.2010**
(21) Anmeldenummer: 06007677.5
(22) Anmeldetag: 12.04.2006
(51) Int. Cl.: A01D 34/86

(54) **Mäh- und/oder Schneidgerät**
Mowing and/or cutting device
Appareil à faucher et/ou couper

(30) Priorität: 22.04.2005 DE 202005006541 U; 22.04.2005 DE 102005018987; 22.04.2005 DE 202005006539 U; 22.04.2005 DE 202005006542 U; 22.04.2005 DE 202005006540 U
(43) Veröffentlichungstag der Anmeldung: 07.03.2007
(60) Teilanmeldung: 10003552.6
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- EP-A- 0 951 813
- EP-A- 1 297 732
- EP-A- 1 378 157
- EP-A- 1 614 338
- US-A- 6 047 531

## Beschreibung

Die Erfindung betrifft ein Mäh- und/oder Schneidgerät mit einem an einem Fahrzeug halterbaren und gegenüber diesem beweglichen Ausleger mit mehreren Abschnitten nach dem Oberbegriff des Anspruchs 1 und einen Ausleger nach dem Oberbegriff des Anspruchs 10.

Bei solchen Mäh- und/oder Schneidgeräten ist es bekannt, in Arbeitsstellung den Ausleger von einem Fahrzeug aus seitlich ausgreifen zu lassen und ihn in Transportstellung zum Beispiel vor dem Fahrzeug eingefaltet zu halten. Dabei ist es üblich, fahrzeugseitig einen ersten Abschnitt des Auslegers um eine vertikale und/oder eine horizontale Achse schwenkbar zu halten und somit die Schwenkbewegung zum Beispiel zwischen Transport- und Arbeitsstellung zu ermöglichen. Ein zweiter, ähnlich langer Abschnitt des Auslegers ist an das dem Fahrzeug abgewandte Ende des ersten Abschnitt mit einem Freiheitsgrad angelenkt und ermöglicht je nach Winkelstellung zwischen den beiden Abschnitten ein unterschiedlich weites Ausgreifen des am äußeren Auslegerende gehaltenen Arbeitskopfes.

Da solche Mäh- und/oder Schneidgeräte in Arbeitsstellung auch verschiedenste Hindernisse übergreifen müssen, die am Straßenrand stehen, zum Beispiel Hecken, insbesondere aber Verkehrsschilder, Ortsschilder, eventuell Ampel- und Laternenmasten und ähnliches, muß der Ausleger sehr flexibel beweglich sein. Bei üblichen Auslegern tritt insbesondere die Schwierigkeit auf, daß zwischen dem ersten und zweiten Abschnitt in deren zum übergreifen eines Hindernisses aufgestellter Stellung ein spitzer Winkel entsteht und damit ein zwar hohes, allerdings nur sehr schmales Hindernis übergriffen werden kann. Insbesondere ein Übergreifen von Orts- oder Richtungshinweisschildern ist damit dann nicht möglich.

Die EP 1 614 338 A1 zeigt einen Ausleger, der ein Übergreifen eines Verkehrsschilds ermöglicht. Hierbei ist jedoch die Ansteuerung der Einstellung der Einzelteile des Auslegers schwierig, Zudem ist der Ausleger in Transportstellung neben dem Fahrerhaus gehalten, was bei mit zwei Personen besetzten Fahrerhäusern zu einer zu großen Fahrzeugbreite führen würde.

Der Erfindung liegt das Problem zugrunde, ein Mäh- und/oder Schneidgerät hinsichtlich seines Auslegers zu optimieren.

Die Erfindung löst dieses Problem durch ein Mäh- und/oder Schneidgerät mit den Merkmalen des Anspruchs 1, sowie durch einen Ausleger mit den Merkmalen des Anspruchs 10. Hinsichtlich vorteilhafter Ausgestaltungen wird auf die abhängigen Ansprüche 2, bis 9 sowie 11 bis 13 verwiesen.

Durch die Erfindung ist es in ihrer Ausbildung nach Anspruch 1 ermöglicht, auch breite Hindernisse zu übergreifen, wobei der quer ausgreifende Abschnitt in dieser übergreifenden Stellung oberhalb des Hindernisses geführt ist, Der Ausleger formt dabei ein Portal aus, dessen oberer Rahmenteil im wesentlichen quer verläuft und damit eine erhebliche Breite überbrückt; eine gemeinsame Einstellbarkeit der Winkel zwischen dem ersten und zweiten Abschnitt einerseits und zwischen dem zweiten und dritten Abschnitt andererseits läßt dennoch eine konstruktiv und auch hinsichtlich der Bedienung einfache Steuerung zu.

Besonders vorteilhaft erlaubt das Mäh- und/oder Schneidgerät mit zumindest einem an einem fahrzeugseitigen Träger beweglich gehaltenen und mehrere gelenkig miteinander verbundene Abschnitte umfassenden Ausleger, der vom Träger ausgehend zumindest einen ersten auf- und abwärts beweglichen, in einer Arbeitsstellung hoch aufragbaren Abschnitt, einen daran anschließenden quer ausgreifbaren zweiten Abschnitt und zumindest einen dritten, abwärts in Richtung Arbeitskopf erstreckbaren Abschnitt umfaßt, trotz der damit eröffneten Aus- und Übergreifmöglichkeiten in Arbeitsstellung eine kompakte Halterung in Transportstellung, die die Fahrzeugbreite nicht belastet und auch eine mit zwei Personen besetzte Fahrerkabine ermöglicht.

Besonders günstig ist der dritte, dem Arbeitskopf zugewandte Abschnitt dabei längenvariabel, um auch bei einer hohen Stellung des ein Hindernis übergreifende Abschnitts noch bis zum Boden reichen zu können und somit auch während des Übergreifens des Hindernisses ein unbeeinträchtigtes Mähergebnis liefern zu können, wobei andererseits eine kompakte Transportstellung möglich bleibt.

Der zweite, an den ersten angelenkte Abschnitt kann eine Längenerstreckung von mindestens 90 Zentimetern, häufig deutlich über 1,20 Meter aufweisen, wodurch auch das Übergreifen von breiten Richtungs- und Ortshinweisschildern möglich wird.

Auch ein Übergreifen eines Führerhauses des Fahrzeuges ist mit dem erfindungsgemäßen Ausbildung unproblematisch möglich, wobei durch den aufragenden ersten Abschnitt dieser auch dicht vor einer steil stehenden Windschutzscheibe stehen kann und anders als im Stand der Technik keinen großen Abstand von dieser in Fahrzeuglängsrichtung benötigt.

Weitere Vorteile und Merkmale der Erfindung ergeben sich aus einem in der Zeichnung dargestellten und nachfolgend beschriebenen Ausführungsbeispiel des Gegenstandes der Erfindung.

(Hieran soll sich der Text der ursprünglichen Beschreibung ab S. 4 oben: "In der Zeichnung zeigt ...") anschließen.

In der Zeichnung zeigt:
- Fig. 1: eine schematische Ansicht von vorne eines erfindungsgemäßen Mäh- und/oder Schneidgeräts mit einer frontseitig an einem Fahrzeug angeordneten Mähvorrichtung in Arbeitsstellung mit ein Hindernis übergreifendem Ausleger,
- Fig. 2: eine ähnliche Ansicht wie Fig. 1 mit in Transportstellung befindlichem Ausleger,
- Fig. 3: das Mäh- und/oder Schneidgerät nach Fig. 1 in Seitenansicht mit in Längstransportstellung befindlichem Ausleger,
- Fig. 4: eine ähnliche Ansicht wie Fig. 3 mit einer erhöhten und weiter vorne gelegenen Ablage auf der Ladefläche für den Arbeitskopf.

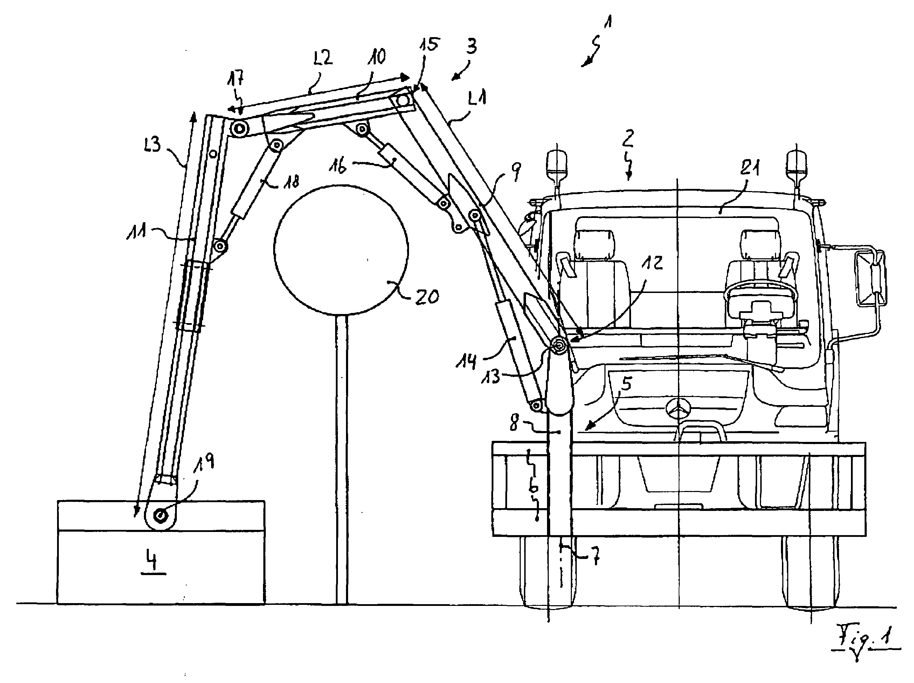

Das in Figur 1 dargestellte und insgesamt mit 1 bezeichnete Mäh- und/oder Schneidgcrät umfaßt ein hier selbstfahrendes Fahrzeug 2, was nicht zwingend ist, einen mehrteiligen Ausleger 3 und zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch eine reine Heckenschere oder dergleichen montierbar. Neben der hier gezeigten Frontmontage des Auslegers 3 kommt zusätzlich oder alternativ auch eine Montage auf der Ladefläche oder eine Heckmontage eines Auslegers 3 in Betracht.

Der Ausleger 3 ist an einem Träger 5 montiert, der eine Querführungseinrichtung 6 mit zum Beispiel zwei Horizontalprofilen und eine daran quer zum Fahrzeug 2 verschiebliche und aufragende Halterung 8 mit einer vertikalen Schwenkachse 7 umfaßt, um die herum der Ausleger 3 schwenkbar ist. Da diese Halterung 8 selbst gegenüber der Querführungseinrichtung 6 nicht seitlich ausgreift, wird sie hier nicht als erster Abschnitt des Auslegers bezeichnet. Dies wäre in anderer Diktion jedoch möglich. Entsprechend wären dann die weiteren Abschnitte anders zu numerieren.

An dem Träger 5 ist der Ausleger 3 in der Aufnahme der Halterung 8 drehbar um die Achse 7 gelagert. Ausgehend hiervon, umfaßt der Ausleger 3 zumindest einen ersten, in einer Arbeitsstellung (Fig. 1) hoch aufragbaren Abschnitt 9, einen daran anschließenden quer ausgreifbaren zweiten Abschnitt 10 und einen dritten, abwärts in Richtung Arbeitskopf 4 erstreckbaren Abschnitt 11. An diesem ist direkt oder unter Zwischenschaltung weiterer Abschnitte der Arbeitskopf 4 schwenkbeweglich um die Achse 19 angehängt. Zur Drehung um diese Achse können optisch verdeckt zwei parallele, im Abschnitt 11 gelegene Hydraulikylinder vorgesehen sein, die über Zugseile gleichwertige Drehungen des Arbeitskopfes 4 in beide Richtungen um die Achse 19 bewirken können.

Das Fahrzeug 2 kann als Schmalspurtraktor ausgebildet sein, um damit einen flexiblen Einsatz auch in engen Bereichen zu ermöglichen. Auch größere, LKW-ähnliche Fahrzeuge sind möglich. Zudem kann die Arbeitsposition des Arbeitskopfes 4 von rechts auf links variiert werden.

Der erste Abschnitt 9 ist neben seiner Drehbarkeit um die vertikale Achse 7 gegenüber der aufragenden Halterung 8 schwenkbeweglich um ein Gelenk 12 mit einer horizontalen Achse 13. Zum Antrieb der Schwenkbewegung um dieses Gelenk 12 dient ein erstes Antriebsorgan 14, hier ein Hydraulikzylinder. Dieser Abschnitt 9 muß daher nicht in jeder Arbeitsstellung hoch aufragen, sondern kann auch nahezu horizontal ausgreifen und somit einen großen Arbeitsbereich abdecken.

An dem vom Fahrzeug 2 ausgreifenden Ende des ersten Abschnitts 9 ist an dem Gelenk 15, dessen Schwenkachse zur Achse 13 des Gelenks 12 parallel liegt, ein zweiter Abschnitt 10 des Auslegers 3 schwenkbeweglich anmontiert. Zum Antrieb der Schwenkbewegung um dieses Gelenk 15 dient ein zweites Antriebsorgan 16, hier ebenfalls ein Hydraulikzylinder, Der zweite Abschnitt 10 muß daher nicht in jeder Arbeitsstellung ungefähr rechtwinklig zum ersten Abschnitt 9 stehen, sondern kann diesen auch in etwa verlängern oder sehr spitzwinklig dazu stehen - je nach momentaner Anforderung.

An dem dem Gelenk 15 abgewandten Ende des zweiten Abschnitts 10 ist an dem Gelenk 17, dessen Schwenkachse wiederum zur Achse 13 des Gelenks 12 parallel liegt, ein dritter Abschnitt 11 des Auslegers 3 schwenkbeweglich anmontiert. Zum Antrieb der Schwenkbewegung um dieses Gelenk 17 dient ein drittes Antriebsorgan 18, hier wiederum ein Hydraulikzylinder.

Dabei können besonders einfach die Winkclstcllungen zwischen dem ersten 9 und dem zweiten Abschnitt 10 einerseits und zwischen dem zweiten 10 und dem dritten Abschnitt 11 andererseits über eine gemeinsame Ansteuerung und Beaufschlagung der Antriebsorgane 16 und 18 mit nur einem Bedienknopf und einer gemeinsamen Leitung einstellbar sein.

Der von dem. Träger 5 aufragbare erste Abschnitt 9 des Auslegers 3 ist hier wie auch der zweite Abschnitt 10 als starres Profil ausgebildet, könnte jedoch auch längenvariabel sein.

Zumindest in einer Arbeitsstellung kann der erste Abschnitt eine Länge L1 von zumindest etwa 1,80 Meter aufweisen, um auch hohe Hindernisse 20 übergreifen zu können. Das Gelenk 15 liegt dadurch in der Stellung nach Fig. 1 etwa 3,00 Meter bis 3, 30 Meter oberhalb des Straßenniveaus. Im gezeichneten Ausführungsbeispiel beträgt die Länge L1 des ersten Abschnitts 9 etwa zwei Meter, um diese Höhe zu erreichen und dennoch den Winkel im Gelenk 12 nicht zu nah an 180° herankommen zu lassen, was im Hinblick auf den Seitenabstand des Fahrzeugs 2 zum Hindernis 20 und auch für die Kraftlinie des Hydraulikzylinders 14 ungünstig wäre.

Der zweite Abschnitt 10 des Auslegers 3 kann hingegen zumindest in dieser Arbeitsstellung deutlich kürzer sein. Er hat insbesondere eine - ggf. variable - Länge L2 zwischen 0,70 und 1,60 Meter. In der in Fig. 1 gezeigten Arbeitsstellung formt dieser Abschnitt 10 den oberen Rahmenteil eines von dem Ausleger gebildeten Portals und übergreift das Hindernis 20 im wesentlichen horizontal oder nur gering geneigt liegend. Dadurch ergibt sich eine optimierte lichte Weite unterhalb des Portals, die nahezu die gesamte Länge L2 des Abschnitts 10 umfassen kann. Es kann auch andere Arbeitsstellungen geben, in denen ein beispielsweise längenvariabler zweiter Abschnitt die Länge des ersten Abschnitts 9 auch überragen könnte. In jedem Fall gibt es aber eine Stellung, in der der Abschnitt 10 kürzer als der erste Abschnitt 9 ist, um somit ein Plazieren des Arbeitskopfes 4 dicht neben dem übergriffenen Hindernis 20 zu ermöglichen.

Der dritte Abschnitt 11 ist hier nach Art eines Teleskops längenvariabel, so daß er eine Länge L3 von etwa einem bis etwa zwei Metern haben kann. In Transportstellung vor dem Fahrzeug 2 kann er auf minimale Länge eingefahren sein und dadurch das Transportmaß begrenzen. Der Arbeitskopf 4 kann dann derart horizontal gehalten ist, daß er innerhalb der maximal zulässigen Fahrzeugbreite bleibt. Auch in Arbeitsstellung nach Fig. 1 könnte der Abschnitt 11 zumindest teilweise eingefahren sein, um dadurch den Arbeitskopf zum Beispiel trotz des Übergreifens des Hindernisses 20 an einer seitlich ansteigenden Böschung oder als Heckenschere einsetzen zu können. Auch eine schwimmende Lagerung ist möglich.

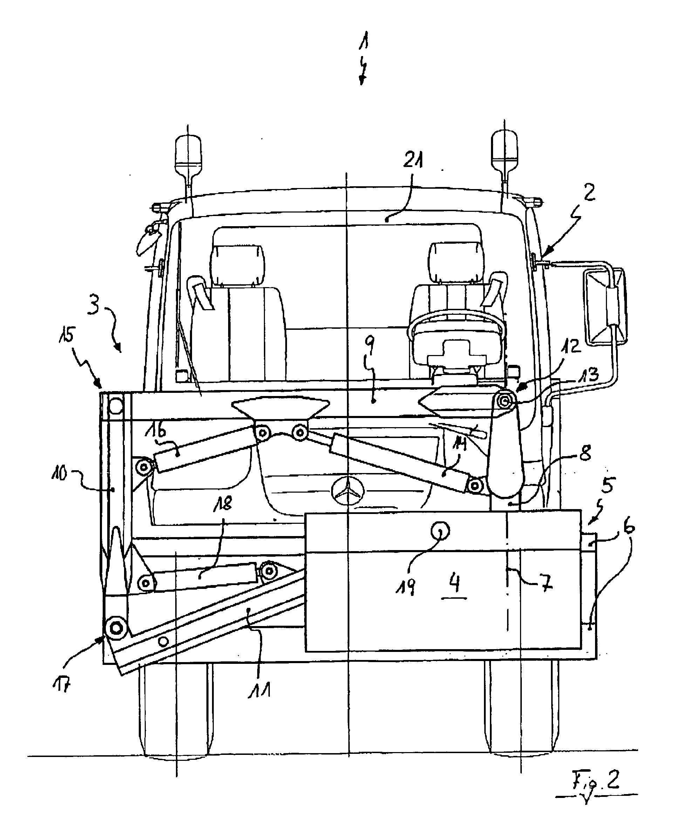

In der in Figur 2 gezeigten Quertransportstellung ist der Ausleger 3 quer vor (oder hinter) dem Fahrzeug 2 derart halterbar, daß der erste Abschnitt 9 als oberster Teil des Auslegers 3 etwa an der Unterkante einer Windschutzscheibe quer zum Fahrzeug 2 liegt, der zweite Abschnitt 10 zumindest nahezu vertikal abwärts weist, was aufgrund seiner geringen Länge möglich ist, und der dritte Abschnitt 11 in eingefahrener Stellung schräg aufwärts mit einer dem ersten Abschnitt entgegengesetzten Querkomponente verläuft. Das Packmaß ist daher minimiert, die Breite gering. Der Mähkopf 4 kann so horizontal und weit unten gehalten werden, dem Fahrer bleibt dadurch ein optimiertes Sichtfeld.

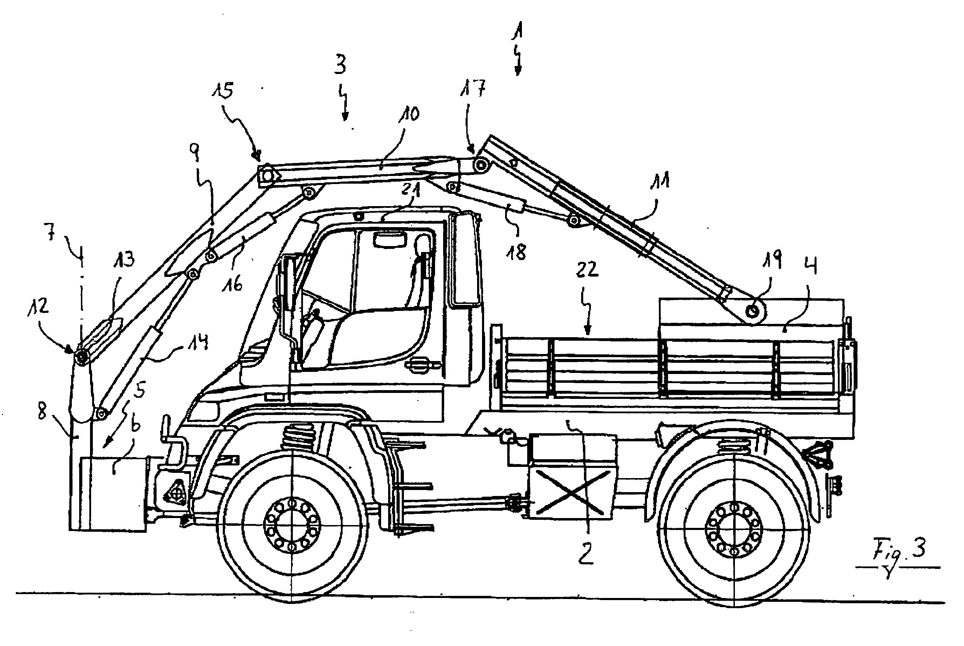

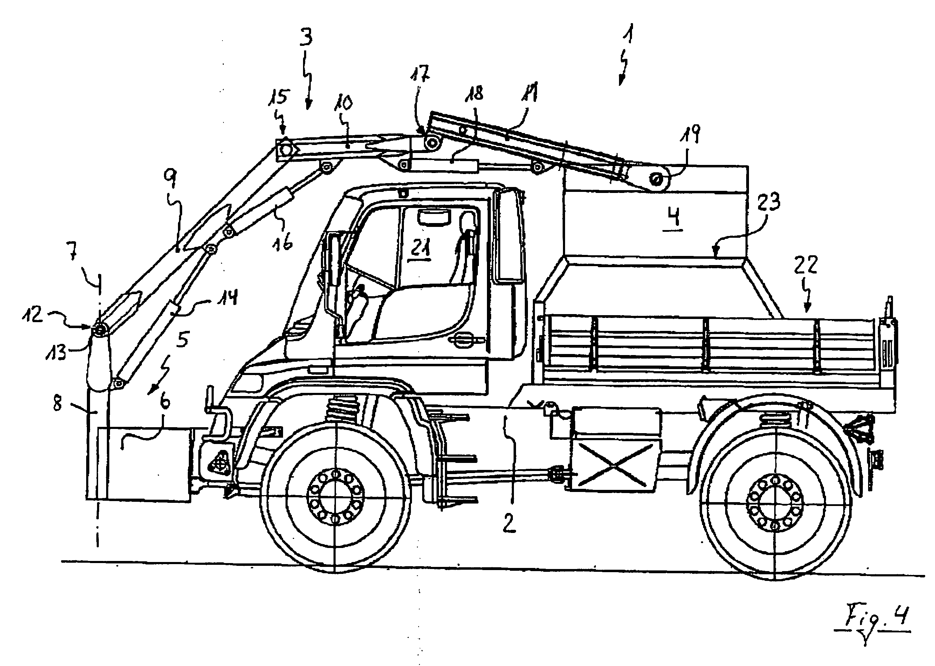

Zusätzlich zu der Quertransportstellung ist auch noch zumindest eine in den Figuren 3 und 4 dargestellte Längstransportstellung ermöglicht, in der der Ausleger 3 bei frontseitigem Anbau längs zum Fahrzeug halterbar ist, wobei der erste Abschnitt 9 so weit aufgestellt ist, daß seine Anlenkung 15 zum zweiten Abschnitt 10 das Führerhaus 21 überragt, der zweite Abschnitt annähernd horizontal oberhalb des Führerhauses 21 gelegen ist und der dritte Abschnitt 11 sich leicht abwärts in Richtung einer Ladefläche 22 erstreckt, wo eine - in der Darstellung nach Fig. 4 erhöhte - Ablage 23 für den Arbeitskopf 4 vorgesehen sein kann. Dadurch, daß der erste Abschnitt 9 dabei steil aufragen kann, und zur Überbrückung zu dem den Arbeitskopf tragenden letzen Abschnitt 11 ein Zwischenabschnitt 10 vorgesehen ist, kann die Windschutzscheibe steil stehen, ohne daß eine Kollisionsgefahr mit dem Ausleger 3 entsteht. Dennoch muß die Halterung 8 für den Ausleger nicht weit vor der Windschutzscheibe plaziert werden, um diese Kollisionsfreiheit zu ermöglichen. Auch die Fahrzeuglänge kann daher gering bleiben.

In dieser Längstransportstellung ist eine Längen- und/oder Winkeleinstellung des dritten Abschnitts 11 an die Geometrie der jeweiligen Ladefläche 22 anpaßbar, so daß auch die Höhe der Ablage 23 und deren Längsausrichtung unterschiedlich sein kann. In Fig. 3 ist der dritte Abschnitt 11 des Auslegers teilweise ausgefahren, so daß der Arbeitskopf hier im Heckbereich der Ladefläche 22 liegt, in Fig. 4 ist für eine weiter vorne und oben gelegene Stellung des Arbeitskopfes 4 der dritte Abschnitt 1 eingefahren. An die Fahrzeuggeometrie sind daher keine besonderen Anforderungen zu stellen. Es können auch verschiedene bestehende Fahrzeuge 2 nachträglich mit einem erfindungsgemäßen Ausleger 3 nachgerüstet werden.

Insgesamt kann die den Ausleger 3 und Arbeitskopf 4 umfassende Einheit kompakt und modular ausgebildet sein. Durch die gemeinsame Ansteuerung der Hydraulikzylinder 16 und 18 kann die Einheit auch an solche Steuerungen angeschlossen werden, die auf herkömmliche Ausleger mit einem Gelenk weniger ausgelegt waren.

Auch ist es vorteilhaft möglich, für bestimmte Anwendungen den zweiten Abschnitt 10 zu entfernen und den dritten Abschnitt 11 direkt an den ersten Abschnitt 9 anzusetzen. Die Abschnitte 9, 10, 11 sind insoweit modular ausgebildet.

### Bezugszeichenliste:

- 1: Mäh- und oder Schneidgerät,
- 2: Fahrzeug,
- 3: Ausleger,
- 4: Arbeitskopf,
- 5: Träger,
- 6: Querführungseinrichtung,
- 7: Schwenkachse,
- 8: Halterung,
- 9: erster Abschnitt,
- 10: zweiter Abschnitt,
- 11: dritter Abschnitt des Auslegers,
- 12: Gelenk,
- 13: Gelenkachse,
- 14: Antriebsorgan,
- 15: Gelenk,
- 16: Antriebsorgan,
- 17: Gelenk,
- 18: Antriebsorgan,
- 19: Achse,
- 20: Hindernis,
- 21: Führerhaus,
- 22: Ladefläche,
- 23: Ablage

## Patentansprüche

1. Mäh- und/oder Schneidgerät (1) mit zumindest einem an einem fahrzeugseitigen Träger (5) beweglich gehaltenen und mehrere gelenkig miteinander verbundene Abschnitte (9; 10; 11) umfassenden Ausleger (3), der in einer Arbeitsstellung auswärts erstreckt ist und zumindest einen Arbeitskopf (4) trägt, wobei der Ausleger (3) vom Träger (5) ausgehend zumindest einen ersten auf- und abwärts beweglichen, in einer Arbeitsstellung hoch aufragbaren Abschnitt (9), einen daran anschließenden quer ausgreifbaren zweiten Abschnitt (10) und zumindest einen dritten, abwärts in Richtung Arbeitskopf (4) erstreckbaren Abschnitt (11) umfaßt,
**dadurch gekennzeichnet,**
**daß** die Winkelstellungen zwischen dem ersten (9) und dem zweiten Abschnitt (10) einerseits und zwischen dem zweiten (10) und dem dritten Abschnitt (11) andererseits gemeinsam einstellbar sind.

2. Mäh- und/oder Schneidgerät nach Anspruch 1,
**dadurch gekennzeichnet,**
**daß** für die Einstellung der beiden Winkelstellungen gemeinsam beaufschlagbare Hydraulikzylinder (16; 18) vorgesehen sind.

3. Mäh- und/oder Schneidgerät nach einem der Ansprüche 1 oder 2,
**dadurch gekennzeichnet,**
**daß** der Ausleger (3) in einer Quertransportstellung quer vor oder hinter dem Fahrzeug (2) derart halterbar ist, daß der erste Abschnitt (9) quer zum Fahrzeug (2), der zweite Abschnitt (10) zumindest nahezu vertikal abwärts und der dritte Abschnitt (11) schräg aufwärts oder nahezu horizontal mit einer dem ersten Abschnitt (9) entgegengesetzten Querkomponente verläuft,

4. Mäh- und/oder Schneidgerät nach Anspruch 3,
**dadurch gekenntzeichnet,**
daß in der Quertransportstellung der dritte Abschnitt (11) in seine kürzeste Stellung eingefahren ist und der Mähkopf (4) derart horizontal gehalten ist, daß er innerhalb der maximal zulässigen Fahrzeugbreite bleibt.

5. Mäh- und/oder Schncidgerät nach einem der Ansprüche 1 bis 4,
**dadurch gekennzeichnet,**
**daß** der von dem Träger (5) aufragbare erste Abschnitt (9) des Auslegers (3) in einer Arbeitsstellung eine Länge (L1) von zumindest 1,80 Meter aufweist.

6. Mäh- und/oder Schneidgerät (1) nach einem der Ansprüche 1 bis 5,
**dadurch gekennzeichnet,**
**daß** der zweite Abschnitt (10) des Auslegers (3) eine Länge (L2) zwischen 0,70 und 1,60 Meter aufweist.

7. Mäh- und/oder Schneidgerät (1) nach einem der Ansprüche 1 bis 6,
**dadurch gekennzeichnet,**
**daß** zumindest der dritte Abschnitt (11) des Auslegers (3) längenvariabel ist.

8. Mäh- und/oder Schneidgcrät nach einem der Ansprüche 1 bis 7,
**dadurch gekennzeichnet,**
**daß** der Ausleger (3) bei frontseitigem Anbau in einer Längstransportstellung längs zum Fahrzeug halterbar ist, wobei der erste Abschnitt (9) so weit aufgestellt ist, daß seine Anlenkung (15) zum zweiten Abschnitt das Führerhaus (21) überragt, der zweite Abschnitt (10) oberhalb des Führerhauses (21) gelegen ist und der dritte Abschnitt (11) sich abwärts in Richtung einer Ladefläche (22) erstreckt.

9. Mäh- und/oder Schneidgerät nach Anspruch 8,
**dadurch gekennzeichnet,**
**daß** in der Längstransportstellung eine Längen- und/oder Winkeleinstellung des dritten Abschnitts (11) an die Geometrie der jeweiligen Ladefläche (22) anpaßbar ist.

10. Ausleger (3) mit mehreren gelenkig miteinander verbundenen Abschnitten (9; 10; 11), der in einer Arbeitsstellung auswärts erstreckt ist und zumindest einen Arbeitskopf (4) abstützt und an einem fahrzeugseitigen Träger (5) beweglich halterbar ist, wobei der Ausleger (3) vom Träger (5) ausgehend zumindest einen ersten auf- und abwärts beweglichen, in einer Arbeitsstellung hoch aufragbaren Abschnitt (9), einen daran anschließenden quer ausgreifbaren zweiten Abschnitt (10) und einen dritten, abwärts in Richtung Arbeitskopf (4) erstreckbaren Abschnitt (11) umfaßt,
**dadurch gekennzeichnet,**
**daß** die Winkelstellungen zwischen dem ersten (9) und dem zweiten Abschnitt (10) einerseits und zwischen dem zweiten (10) und dem dritten Abschnitt (11) andererseits gemeinsam einstellbar sind.

11. Ausleger (3) nach Anspruch 10,
**dadurch gekennzeichnet,**
**daß** der Ausleger (3) in einer Quertransportstellung quer vor oder hinter dem Fahrzeug (2) derart halterbar ist, daß der erste Abschnitt (9) quer zum Fahrzeug (2), der zweite Abschnitt (10) zumindest nahezu vertikal abwärts und der dritte Abschnitt (11) schräg aufwärts oder nahezu horizontal mit einer dem ersten Abschnitt (9) entgegengesetzten Querkomponente verläuft.

12. Ausleger (3) nach Anspruch 11,
**dadurch gekennzeichnet,**
**daß** in einer Arbeitsstellung die drei Abschnitte (9; 10; 11) ein hoch erstrecktes Portal zum Übergreifen eines Hindernisses (20) ausbilden.

13. Ausleger (3) nach einem der Ansprüche 11 oder 12,
**dadurch gekennzeichnet,**
**daß** der dritte Abschnitt (11) nach Entfernen des zweiten Abschnitts (10) direkt an den ersten Abschnitt (9) ansetzbar ist.

## Claims

1. A mowing and/or cutting apparatus (1) having at least one boom (3), movably held on a vehicle-located support (5) and comprising a plurality of portions (9; 10; 11) connected to one another in an articulated manner, which is extended outwards in a working position and bears at least one working head (4), wherein the boom (3) comprises, starting at the support (5), at least one first portion (9), movable upwards and downwards and able to project upwards in a working position, an adjacent second portion (10) able to reach out transversely and at least one third portion (11) extendable downwards in the direction of the working head (4), **characterised in that** the angular positions between the first (9) and the second (10) portion on the one hand and between the second (10) and the third portion (11) on the other hand can be adjusted jointly.

2. A mowing and/or cutting apparatus according to claim 1, **characterised in that** hydraulic cylinders (16; 18) which can be acted upon jointly are provided for the adjustment of the two angular positions.

3. A mowing and/or cutting apparatus according to one of claims 1 and 2, **characterised in that** in a transverse transport-position, the boom (3) can be secured in a transverse manner in front of or behind the vehicle (2) in such a manner that the first portion (9) runs transversely to the vehicle (2), the second portion (10) at least almost vertically downwards and the third portion (11) at an upwards incline or almost horizontally with a transverse component in an opposite direction to the first portion (9).

4. A mowing and/or cutting apparatus according to claim 3, **characterised in that** in the transverse transport-position, the third portion (11) is retracted into its shortest position and the mowing head (4) is held horizontally in such a manner that it remains within the maximum permissible vehicle width.

5. A mowing and/or cutting apparatus according to any one of claims 1 to 4, **characterised in that** the first portion (9), able to project up from the support (5), of the boom (3) has a length (L1) of at least 1.80 meters in a working position.

6. A mowing and/or cutting apparatus (1) according to any one of claims 1 to 5, **characterised in that** the second portion (10) of the boom (3) has a length (L2) between 0.70 and 1,60 meters.

7. A mowing and/or cutting apparatus (1) according to any one of claims 1 to 6, **characterised in that** at least the third portion (11) of the boom (3) is variable in length.

8. A mowing and/or cutting apparatus according to any one of claims 1 to 7, **characterised in that** when mounted at the front in a longitudinal transport-position, the boom (3) can be secured in a longitudinal manner to the vehicle, wherein the first portion (9) is positioned upright to such an extent that its articulation (15) to the second portion surmounts the driver's cab (21), the second portion (10) is located above the driver's cab (21) and the third portion (11) reaches downwards In the direction of a loading area (22).

9. A mowing and/or cutting apparatus according to claim 8, **characterised in that** in the longitudinal transport-position, a longitudinal and/or angular adjustment of the third portion (11) can be adapted to the geometry of the respective loading area (22).

10. A boom (3) having a plurality of portions (9; 10; 11) connected to one another in an articulated manner, which is extended outwards in a working position and supports at least one working head (4) and which Is movably securable on a vehicle-located support (5), wherein the boom (3) comprises, starting at the support (5), at least one first portion (9), movable upwards and downwards and able to project upwards in a working position, an adjacent second portion (10) able to reach out transversely and a third portion (11) extendable downwards in the direction of the working head (4), **characterised in that** the angular positions between the first (9) and the second (10) portion on the one hand and between the second (10) and the third portion (11) on the other hand can be adjusted jointly.

11. A boom (3) according to claim 10, **characterised in that** in a transverse transport-position, the boom (3) can be secured in a transverse manner in front of or behind the vehicle (2) in such a manner that the first portion (9) runs transversely to the vehicle (2), the second portion (10) at least almost vertically downwards and the third portion (11) at an upwards incline or almost horizontally with a transverse component in an opposite direction to the first portion (9).

12. A boom (3) according to claim 11, **characterised in that** in a working position, the three portions (9; 10; 11) form an upwards extended portal for spanning an obstacle (20).

13. A boom (3) according to one of claims 11 and 12, **characterised in that** the third portion (11) can be directly attached to the first portion (9) after removal of the second portion (10).

## Revendications

1. Appareil de fauchage et/ou de coupe (1) avec au moins un bras (3) maintenu mobile sur un support (5) côté véhicule et comprenant plusieurs sections (9; 10; 11) raccordées entre elles de manière articulée, qui s'étend vers l'extérieur en position de travail et qui porte au moins une tête de travail (4), dans lequel le bras (3) comprend, à partir du support (5), au moins une première section, (9) mobile vers le haut et vers le bas et pouvant s'élever en position de travail, une deuxième section (10) qui s'y raccorde et peut se déployer transversalement et au moins une troisième section (11) pouvant s'étendre vers le bas en direction de la tête de travail (4),
**caractérisé en ce que**
les positions angulaires entre la première section (9) et la deuxième section (10), d'une part, et entre la deuxième section (10) et la troisième section (11), d'autre part, peuvent être ajustées ensemble.

2. Appareil de fauchage et/ou de coupe selon la revendication 1,
**caractérisé en ce que**,
pour ajuster les deux, positions angulaires, il est prévu des vérins hydraulique (16; 18) qui peuvent être alimentés ensemble.

3. Appareil de fauchage et/ou de coupe selon l'une quelconque des revendications 1 ou 2,
**caractérisé en ce que**
le bras (3) peut être maintenu en position de transport transversale transversalement devant ou derrière le véhicule (2) de sorte que la première section (9) s'étende transversalement au véhicule (2), que la deuxième section (10) s'étende au moins presque verticalement vers le bas et que la troisième section (11) s'étende en oblique vers le haut ou presque horizontalement avec une composante transversale opposée à la première section (9).

4. Appareil de fauchage et/ou de coupe selon la revendication 3,
**caractérisé en ce que**,
en positon de transport transversale, la troisième section (11) est engagée dans sa positon la plus courte et la tête de fauchage (4) est maintenue horizontalement de manière à rester dans la largeur de véhicule maximale autorisée.

5. Appareil de fauchage et/ou de coupe selon l'une quelconque des revendications 1 à 4,
**caractérisé en ce que**
la première section (9) du bras (3) pouvant s'élever du support (5) présente une longueur (L1) d'au moins 1,80 mètre en positon de travail.

6. Appareil de fauchage et/ou de coupe (1) selon l'une quelconque des revendications 1 à 5,
**caractérisé en ce que**
la deuxième section (10) du bras (3) présente une longueur (L2) comprise entre 0,70 et 1,60 mètre.

7. Appareil de fauchage et/ou de coupe (1) selon l'une quelconque des revendications 1 à 6,
**caractérisé en ce que**
au moins la troisième section (11) du bras (3) est variable en longueur.

8. Appareil de fauchage et/ou de coupe selon l'une quelconque des revendications 1 à 7,
**caractérisé en ce que**
le bras (3) peut être maintenu rapporté côté frontal en position de transport longitudinale longitudinalement par rapport au véhicule, dans lequel la première section (9) est assez largement déployée pour que son articulation (15) par rapport à la deuxième section dépasse de la cabine (21) du conducteur, que la deuxième section (10) soit située au-dessus de la cabine (21) du conducteur et que la troisième section (11) s'étende vers le bas en direction d'une surface de chargement (22).

9. Appareil de fauchage et/ou de coupe selon la revendication 8,
**caractérisé en ce que**,
en position de transport longitudinale, un réglage en longueur et /ou un réglage angulaire de la troisième section (11) peut/peuvent être adaptés à la géométrie de la surface de chargement respective (22).

10. Bras (3) comprenant plusieurs sections (9; 10; 11) raccordées entre elles de manière articulée, qui s'étend vers l'extérieur en, position de travail et soutient au moins une tête de travail (4) et qui peut être maintenu mobile sur un support (5) côté véhicule, dans lequel le bras (3) comprend, à partir du support (5), au moins une première section (9) mobile vers le haut et vers le bas et pouvant s'élever en position de travail, une deuxième section (10) qui s'y raccorde et peut se déployer transversalement et une troisième section (11) pouvant s'étendre vers le bas en direction de la tête de travail (4),
**caractérisé en ce que**
les positions angulaire entre la première section (9) et la deuxième section (10), d'une part, et entre la deuxième section (10) et la troisième section (11), d'autre part, peuvent être ajustées ensemble.

11. Bras (3) selon la revendication 10,
**caractérisé en ce que**
le bras (3) peut être maintenu en position, de transport transversale transversalement devant ou derrière le véhicule (2) de sorte que la première section (9) s'étende transversalement an véhicule (2), que la deuxième section (10) s'étende au moins presque verticalement vers le bas et que la troisième section (11) s'étende en oblique vers le haut ou presque horizontalement avec une composante transversale opposée à la première section (9).

12. Bras (3) selon la revendication 11.
**caractérisé en ce que**,
en position de travail, les trois sections (9; 10; 11) forment un portique étendu vers le haut pour chevaucher un obstacle (20).

13. Bras (3) selon l'une quelconque des revendications 11 ou 12.
**caractérisé en ce que**
la troisième section (11) peut être fixée directement sur la première section (9) après enlèvement de la deuxième section (10).
